(19)

**Europäisches Patentamt**

**European Patent Office**

**Office européen des brevets**

(11) **EP 3 910 009 A1**

(12) **EUROPEAN PATENT APPLICATION**

(43) Date of publication:
**17.11.2021 Bulletin 2021/46**

(21) Application number: **20174377.0**

(22) Date of filing: **13.05.2020**

(51) Int Cl.:
*C08J 5/04* (2006.01)          *B32B 5/02* (2006.01)
*B32B 5/26* (2006.01)          *D06N 3/00* (2006.01)
*D06N 3/04* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Evonik Operations GmbH**
**45128 Essen (DE)**

(72) Inventors:
- **CEPA, Steffen**
  **45768 Marl (DE)**
- **KARGER-KOCSIS, József**
  **deceased (HU)**
- **BARANY, Tamas**
  **2051 Biatorbágy (HU)**
- **VARGA, László József**
  **1119 Budapest (HU)**

- **BABIK, Sebastian**
  **40468 Düsseldorf (DE)**
- **MONDRZYK, Sabrina**
  **46282 Dorsten (DE)**
- **SPITZER, Udo**
  **45721 Haltern am See (DE)**
- **EBBERS, André**
  **44791 Bochum (DE)**
- **KARGER-KOCSIS, Anna**
  **2341 PH Oegstgeest (NL)**
- **KARGER-KOCSIS, Victor**
  **67663 Kaiserslautern (DE)**

(74) Representative: **Evonik Patent Association**
**c/o Evonik Industries AG**
**IP Management**
**Bau 1042A/PB 15**
**Paul-Baumann-Straße 1**
**45772 Marl (DE)**

(54) **FIBER POLYMER COMPOSITE**

(57)    The present invention relates to fiber polymer composite comprising fibers of a first material and a matrix material, the matrix material being in direct contact with at least some of the fibers, characterized in that the matrix material comprises at least 5 % by weight based on the whole matrix material of an amorphous poly-alpha-olefin, to a process for producing the fiber polymer composite, and to the use of the fiber polymer composite.

EP 3 910 009 A1

**Description**

The present invention relates to fiber polymer composite comprising fibers of a first material and a matrix material, the matrix material being in direct contact with at least some of the fibers, characterized in that the matrix material comprises at least 5 % by weight based on the whole matrix material of an amorphous poly-alpha-olefin, to a process for producing the fiber polymer composite, and to the use of the fiber polymer composite.

Plenty classes of fiber reinforced materials are known in the art., e.g. polymer fiber composites, carbon fiber composites, glass fiber composites, metal fiber composites, wood composites (cellulose fiber composites) also known as WPC, and other composites, e.g. ceramic-, nano-, textile-, and graphene composites.

These different composite classes are usually divided into two sub classes. The sub classes are differentiated by the properties of the matrix material used to embed the fibers. The one matrix material being thermosets, e.g. thermosettings plastics that cannot be deformed by heating after curing. Such thermosets are for example most of the epoxy resins, crosslinked polyurethanes, crosslinked unsaturated polyester resins. The other matrix material are thermoplastics, which can be formed when heated, e.g. polyamides or polyolefines. The latter have interesting properties and are known in the market for a while.

WO 2004103673 A2 [Propex/BTG International limited] and its subsequent filings and granted patents, e.g. EP1631431B1, US9403341B2, US9873239B2, and US2018126708A1 describe a process to prepare a polymeric article comprises the steps of: (a) forming a ply having successive layers, namely (ii) a first layer made up of strands of an oriented polymeric material; (ii) a second layer of a polymeric material; (iii) a third layer made up of strands of an oriented polymeric material, wherein the second layer has a lower peak melting temperature than that of the first and third layers; (b) subjecting the ply to conditions of time, temperature and pressure sufficient to melt a proportion of the first layer, to melt the second layer entirely, and to melt a proportion of the third layer; and to compact the ply; and (c) cooling the compacted ply. A consolidation temperature (sometimes also named compaction temperature) of 175 ° C or more was used when polypropylene was used as material for all three layers. Thermoplastic composites comprising highly oriented polypropylene tapes in a self-reinforced polypropylene matrix made of 100 % polypropylene are available from Propex Furnishing Solutions GmbH & Co. KG under the tradename CURV®.

WO2004028803(A1) [Lankhorst Indutech] describes a method for reinforcing an article comprising attaching to at least one surface of said article a tape, film or yarn of a drawn thermoplastic polymer. The thermoplastic material being of essentially the same composition as said tape, film or yarn. The tape, film or yarn is attached to said article by means of a heat treatment and/or by applying pressure. A 100 % polypropylene fiber enforced composite is sold under the trade name PURE® from Lankhorst Yarns BV.

The main disadvantage of polymer fiber composites made from polyolefin thermoplastic matrix material and polyolefin fibers based on the same polyolefin, e.g. polypropylene, is that the fibers are partly melted or exposed to temperatures close to the glass transition or melting temperature when being embedded into the matrix. Often drawn and therefore highly orientated fibers are used to produce the polymer fiber composites and these fibers (partly) loose the orientation due to the thermal stress and therefore (partly) loose some of their properties.

It was also shown by T. Barany et al. (Polymer Testing 28 (2009) 176-182") that it is difficult not to come close to the melting temperature of the polypropylene fibers if a polypropylene matrix is used for embedding of polypropylene fibers.

US10384400B2 [Hyundai Motor Company] describes a method of preparing a thermoplastic resin composite includes laminating a matrix resin layer and a reinforcing resin layer to prepare a resin laminate, and heat-bonding the resin laminate, and prior to the step of heat-bonding the resin laminate, fixing one or more selected from the group consisting of the reinforcing resin layer and the resin laminate using a stitch resin having a draw ratio of less than 10:1 and a melting point of 150° C. or lower (100 to 150 ° C). The reinforcing fibers have a melting point of from 160 to 180 °C. This process has the disadvantage, that a further fixing step using a stitching resin needs to be performed.

The problem addressed by the present invention was therefore that of providing a polymer fiber composites, preferably made from polyolefin thermoplastic matrix material and polyolefin fibers based on the same polyolefin, that do not have one or more of the disadvantages of the prior art.

It has been found that, surprisingly, that the use of an amount of at least 5 % by weight of amorphous poly-alpha-olefins in the matrix material can solve one or more of the problems mentioned.

The present invention therefore provides fiber polymer composite comprising fibers of a first material and a matrix material, the matrix material being in direct contact with at least some of the fibers, characterized in that the matrix material comprises at least 5 % by weight based on the whole matrix material of an amorphous poly-alpha-olefin.

The present invention is also directed to a process for producing the fiber polymer composites as claimed in the claims und more described in detail below.

The invention is further directed to the use of the fiber polymer composite as claimed in the claims and more described in detail below.

By using amorphous poly-alpha olefines (APAO) according to the invention, especially amorphous high polypropylene content APAOs (APP), it is possible to increase the difference (delta) between the melting temperatures of the polypropylene fiber material and the material used as matrix material.

It is therefore possible, to use lower compacting temperatures and therefore the thermal stress of the fibers is reduced, resulting in a lower loss of the original properties of the fibers.

The APAOs show a very good wetting of the fibers / the fiber material and can therefore be applied as very thin film or even sprayed as aqueous dispersion. The resulting semi-finished products obtained after compaction can still be flexible (Young's Modulus of about 800 to 1500 MPa) and can show higher values of perforation energy.

A further advantage of the present invention is that the haptic of the resulting semi-finished product is the same or almost the same as the haptic of the untreated fiber material if the matrix material is applied only on one side of the fiber material, because the fibers are not melted (on).

The fiber polymer composite according to the invention, the process to produce fiber polymer composite according to the invention and the inventive use of the fiber polymer composite are described by way of example hereinafter, without any intention that the invention be restricted to these illustrative embodiments. Where ranges, general formulae or classes of compounds are specified hereinafter, these shall encompass not only the corresponding ranges or groups of compounds which are explicitly mentioned but also all subranges and subgroups of compounds which can be obtained by leaving out individual values (ranges) or compounds. Where documents are cited in the context of the present description, their content shall fully form part of the disclosure content of the present invention, particularly in respect of the matters referred to. Where figures are given in percent hereinbelow, these are percentages by weight unless stated otherwise. Where averages, for example molar mass averages, are specified hereinafter, these are the numerical average unless stated otherwise. Where properties of a material are specified hereinafter, for example viscosities or the like, these are the properties of the material at 25°C, unless stated otherwise. Where chemical (empirical) formulae are used in the present invention, the specified indices maybe not only absolute numbers but also average values. The indices relating to polymeric compounds are preferably average values.

The fiber polymer composite according to the invention comprises fibers of a first material and a matrix material, the matrix material being in direct contact with at least some of the fibers and are characterized in that the matrix material comprises at least 5 % by weight based on the whole matrix material of an amorphous poly-alpha-olefin (APAO).

The fibers of the first material are preferably selected from polymer fibers, carbon fibers, glass fibers, metal fibers, cellulose fibers, ceramic fibers, nano fibers, textile fibers, and graphene fibers, more preferably selected from polymer fibers, even more preferably selected from polyolefin fibers and most preferably selected from polypropylene fibers. Preferably the polypropylene fibres have a melting temperature $T_m$ determined by DSC of above 160 °C, preferably above 165 °C.

The fibers can be present in the form of yarns, textiles, fabrics, fleeces, bands, ribbons or tapes etc. Preferably, the fibres are oriented and elongate. Woven fabrics are preferably made up of tapes, fibre yarns or filament yarns, or they may comprise a mixture of fibre or filament yarns and tapes.

Particularly suitable examples of commercially available tapes, films and yarns include Superprof (Ef) (Lankhorst-Indutech B. V., Sneek, the Netherlands), Geolon (Ten Cate, the Netherlands), highly stretched split PP tapes with a nominal weight of 200 g/m$^2$, a melting temperature $T_m$ of 168.6 °C (determined by DSC), and a tensile strength of $280\pm12$ MPa (measured on a single tape) available from Tiszatextil Ltd., Tiszaújváros, Hungary), or a high strength PP multifilament with a nominal weight of 178 g/m$^2$, a melting temperature Tm of 171.6 °C (determined by DSC), diameter is $27.6 \pm 0.6$ μm (measured on single fibers), and a tensile strength of $558\pm26$ MPa available from Lanex a.s., (Bolatice, Czech Republic), the fabric being prepared on request by Csendes és Csendes Ltd. (Szigetbecse, Hungary). The tensile tests of single fibers were performed at room temperature on a Zwick Z005 universal testing machine (Zwick GmbH, Ulm, Germany) installed with a 20 N load cell, with a crosshead rate of 5 mm/min, a pre-load of 0,01 N, a clamping length of 50 mm. In each case, fifty single fibers were tested. Tensile tests of tapes were performed at room temperature on a Zwick Z005 universal testing machine (Zwick GmbH, Ulm, Germany) installed with a 5 KN load cell, with a crosshead rate of 5 mm/min, a pre-load of 0,1 N, a clamping length of 50 mm. In each case, ten single tapes were tested. DSC tests were performed on a TA DSC Q2000 (TA Instruments, New Castle, DE, USA), with a heating rate of 10 °C/min; in the temperature range of -100 and 200 °C. The results were determined from the first heating run.

The matrix material preferably comprises 50% to 100% by weight, preferably at least 70% by weight and more preferably at least 90% by weight of one or more APAOs. Further constituents of the matrix material may especially be a tackifier resin and/or a wax, especially a Fischer-Tropsch wax or a polyethylene wax, or fillers, preferably inorganic fillers, especially MgO, CaSO$_4$ (Gypsum), or talc, colorants, dyes and/or flame retardants. Preferred matrix material includes from 50% to 100% by weight of an APAO, 0% to 40% by weight of a tackifier resin, e.g. hydrogenated C5/C9 Escorez™ 5300, from Exxon Mobil Corporation, and 0% to 10% by weight of a Fisher-Tropsch or PE wax, for example Shell GTL Sarawax SX80. Most preferably the matrix material consists of one or more APAOs, preferably of one APAO.

The weight ratio of matrix material to fibers is preferably of from 1 to 20 to 1 to 1, more preferably 1 to 15 to 1 to 2, most preferably 1 to 10 to 1 to 3.

Preferably the amorphous poly-alpha-olefin has a melt viscosity at 190°C of less than 200 Pas, more preferably of from 5 to 150 Pas, determined by the method specified below.

The viscosity was determined at 190°C by measurements with a rotary viscometer analogously to DIN 53 019. The viscosity was determined at 190°C by measurements with the CAP 2000 + cone-plate viscometer from Brookfield with a viscosity-dependent shear rate analogously to the following table:

| Cone | Shear rate | Eta (at 10% utilization of the torque) | Eta (at 100% utilization of the torque) |
|------|-----------|----------------------------------------|-----------------------------------------|
| 07 | 10 s$^{-1}$ | 6300 mPas | 63 000 mPas |
| 08 | 10 s$^{-1}$ | 25 000 mPas | 250 000 mPas |
| 07 | 30 s$^{-1}$ | 2100 mPas | 21 000 mPas |

Calibration of the Brookfield viscometer was accomplished using a Newtonian standard sample of the 500000 BW type. This was sourced from the Zentrum für Messen und Kalibrieren & Analytik GmbH and issued with a corresponding calibration certificate.

The amorphous poly-alpha-olefin preferably has a number average molecular weight $M_n$ of from 5000 to 35000 g/mol, more preferably of from 10000 to 25000 g/mol, determined by the method specified below.

The amorphous poly-alpha-olefin preferably has a weight average molecular weight $M_w$ of from 50000 to 150000 g/mol, more preferably of from 70000 to 125000 g/mol, determined by the method specified below.

$M_w$ is the weight-average molecular weight and $M_n$ the number-average molecular weight. The molecular weights $M_w$ and $M_n$ are determined by means of HT-GPC [high-temperature gel permeation chromatography] as described in DIN 55 672. Specifically, analytical HT-GPC was conducted by means of a PL220 oven (Agilent, Waldbronn) with an integrated isocratic pump at 150°C. The mobile phase used was 1,2,4-trichlorobenzene (TCB) (Merck, Darmstadt) spiked with ~ 1 g/L butylhydroxytoluene (BHT) with a flow rate of 1 ml/min, and the stationary phase used was one Agilent PLgel Olexis Guard (50 x 7.5 mm, precolumn) and three Agilent PLgel Olexis (300 x 7.5 mm). Detection was effected by means of an IR detector (model IR4, PolymerChar, Valencia, Spain). The datasets were evaluated by means of a polystyrene calibration EasiCal PS-1, Agilent) by the software WinGPC (Polymer Standards Service, Mainz).

The amorphous poly-alpha-olefin preferably has a molecular weight distribution ($M_w/M_n$) of from 4 to 8, more preferably 4.5 to 7.5, determined by dividing the molecular weight $M_w$ with the molecular weight $M_n$.

The amorphous poly-alpha-olefin preferably has a glass transition temperature of from -45 to -20 °C, more preferably of from -40 to -25, most preferably of from -35 to -25, determined in accordance to DIN 53 765, known as DSC (dynamical scanning calorimetry) method, using a DSC1 of Mettler Toledo and the software Stare Software 10.0. Herein, sample is cooled down to -90°C and kept at - 90°C for 5 minutes. Following, a first heating curve is taken at 10 Kelvin per minute to 200°C. Sample is kept at 200°C for 5 minutes. Following, a second cooling is done at 10 Kelvin per minute down to -90°C. Sample is kept at -90°C for 5 minutes. Following, a second heating curve is taken at a rate of 10 Kelvin per minute up to 200°C. The second heating curve is used to read the numbers.

The amorphous poly-alpha-olefin preferably has a thermal stability under load S.A.F.T. of from 75 to 130 °C, more preferably of from 80 to 120 °C and most preferably of from 85 to 100 °C, determined similar to WPS 68. The thermal stability under load describes the thermal stability behaviour of bonded substrates. The method is described in "WPS 68 - Überarbeitete Methode zur Prüfung der Wärmestandfestigkeit für die holzverarbeitende Industrie", Ausgabe Dez. 1989, Technische Kommision Holzklebstoffe im Fachverband Klebstoffindustrie e.V., Düsseldorf. Two rectangular pieces of cardboard of 100 mm x 20 mm x 1 mm (length x width x thickness) are used. The molten polymer (ca. 0,1 g) is applied onto the inner square-like area of 20 mm x 20 mm of the first cardboard sample, i.e. covering the area from 40 mm to 60 mm of the specimen over its whole width. Following, the second cardboard sample is rotated by 90 degree with respect to the first cardboard and bond to the first cardboard in such a way that the outmost square of 20 mm x 20 mm (i.e. the area from 0 mm to 20 mm over the whole width) forms an overlapping bond to the whole covered area of the first substrate in a "T"-like shape. Both pieces are covered with a weight of 2 kg for 5 minutes, allowing the sample to cool down. Material that squeezed out of the 20 mm x 20 mm area is removed. The sample is stored for 24 hours at ambient temperature. It is then transferred into a heating chamber of 50°C starting temperature. A weight of 450 g is attached to the foot of the "T-structure" while the upper part is fixed. Following, the chamber is heated with heating speed of 5°C per hour. In intervals of one hour the sample is checked whether the bond broke up and the weight fell down. The S.A.F.T. is the 5°C-wide interval of temperature within the weight fell down. It is characterized by its mean value of lower and upper temperature within the 5°C interval.

The amorphous poly-alpha-olefin preferably has a softening point (Ring and Ball) of from 95 to 125, more preferably of from 100 to 115 °C, and most preferably of from 105 to 110 °C, determined according to DIN EN 1427: The material is heated up at 180 °C and then the melt is casted into a ring. After 24 h (this time is needed for recrystallization of the amorphous products) the sample is stressed concentrically with a chrome-plated steel ball and the test frame is immersed in a bath of glycerin. This is heated up at a rate of approx. 5 °C/min. The softening point is the temperature when the ball contacts the baseplate of the test frame.

Preferred fiber polymer composites according to the invention are those, where the amorphous poly-alpha-olefin shows more than one, preferably all of the preferred, more preferably of the more preferred, and most preferably of the most preferred properties.

Accordingly, preferred fiber polymer composites comprise an amorphous poly-alpha-olefin that has a melt viscosity at 190°C of less than 200 Pas, a number average molecular weight $M_n$ of from 5000 to 35000 g/mol, a weight average molecular weight $M_w$ of from 50000 to 150000 g/mol, and a glass transition temperature of from -45 to -20 °C. Most preferred fiber polymer composites comprise an amorphous poly-alpha-olefin that has a melt viscosity at 190°C of from 5 to 150 Pas, a number average molecular weight $M_n$ of from 10000 to 25000 g/mol, a weight average molecular weight $M_w$ of from 70000 to 125000 g/mol, and a glass transition temperature of from -35 to -25°C.

The APAO is preferably a propene- or 1-butene-rich, more preferred a propene-rich APAO. Preferred propene-rich APAO is based preferably to an extent of > 50% by weight, preferably to an extent of 51% to 98% by weight, more preferably 60% to 75% by weight, on propene as monomer, based on all monomers. In addition, the propene-rich APAO may include 1-butene and/or ethene, preferably 1-butene and ethene or 1-butene alone, as comonomers. The sum total of 1-butene and ethene here is < 50% by weight, preferably with an ethene content of 0% to 25% by weight, more preferably >0 % to 15% by weight, based on all monomers.

Determination of the monomer content, the polymer is based on, and of the microstructure (isotacticity [% of the mmmm-pentade]) can be done using high temperature $^{13}$C NMR spectroscopy as described by A. Zambelli et al: Macomolecules, 8, 687 (1975) and A. Filho, G. Galland: J. Appl. Polym. Sci., 80, 1880 (2001). The high temperature $^{13}$C NMR spectroscopy was preformed using a NMR-spectrometer AVANCE III HD from Bruker with a cryo-probe system and a frequency of 500 MHz. The Bruker Topspin 3.5 software was used to show and analyze the spectra.

The polymer samples were solved in an amount to obtain a solution containing about 50 % by weight of the polymer sample based on the total solution in 1,1,2,2-tetrachloroethane-d2 comprising 0.05 mol/L $Cr(acac)_3$ as relaxation agent at approximately 120 °C in a NMR-tube of 5 mm in diameter.

Measurement parameters had been:

| | | |
|---|---|---|
| Number of Scans: | 2000 | (corresponds to approx. 2h measuring time) |
| Puls program: | zgig30 | (invers gated decoupling with 30° pulse) |
| D1: | 3 sec | (Delay between each pulse) |
| Temperature: | 120 °C | (393 K) |

The intensity of the signals corresponds to the molar ratio of the monomer components. By using the molar mass of the monomer components (e.g. ethylene, propylene, and 1-butene) the molar ratio was then converted to % by weight. The tacticity (if needed) can be determined from the split-up of the methyl-group signal for propylene (for details see: J.C. Randall, Polymer Sequence determination, Academic Press, New York 1977).

The amorphous poly-alpha-olefin according to the invention may advantageously include from 0.01% to 3% by weight of at least one antioxidant. Antioxidants used may be any substances known as antioxidants and/or inhibitors, i.e. substances that stop the propagation of a free-radical reaction. The amorphous poly-alpha-olefin according to the invention preferably contains sterically hindered amines, e.g. piperidine derivatives, preferably sterically hindered phenols, for example Irganox 1010, Naugard XL1, Songnox 1035. In this way, it is possible to prevent or reduce the degradation of the APAO and/or yellowing of the APAO.

Suitable APAOs are for example those available from Evonik Resource Efficiency GmbH under trade name VESTOPLAST®. Preferred APAOs are those VESTOPLAST® APAOs of the 700-type, preferably VESTOPLAST® 708, 750, or 792. Other options may be APAOs from Rextac LLC, e.g. 1115 or 1230, or from Eastman, e.g. Eastoflex™ P1010 or P1023.

The process for producing the fiber polymer composite according to the invention is characterized in that it comprises the following steps:

a) providing a structure comprising one or more fibres
b) contacting at least one side of the structure with an amorphous poly-alpha-olefin
c) optionally contacting the amorphous poly-alpha-olefin with one side of a further structure comprising one or more fibres,
d) optionally repeating steps b) and c) one or more times, and
e) treating the product resulting from step b), c) or d) thermally by applying a temperature of from 115 to 145 °C, preferably 120 to 140 °C and preferably at a pressure of at least 0.2 MPa, more preferably 0.4 to 4 MPa.

The thermal treatment in step e) is preferably conducted over a period of 15 seconds to 1200 seconds, more preferably 30 seconds to 500 seconds, and most preferably 45 to 90 seconds.

Multi ply/fiber polymer composites can be produced by performing step d) as often as necessary to obtain a fiber polymer structure comprising the number of structures comprising fibers as needed. Preferably step d) is repeated 1 to 10, more preferably 2 to 6 times to obtain a multi ply/ multi fiber polymer composite comprising 2 to 11, more preferably 3 to 7 structures comprising one or more fibers.

The structure comprising one or more fibres can be selected from fibres or fibres comprising structures as mentioned above.

The amorphous poly-alpha-olefin can be selected from one of the APAOs mentioned above.

The amorphous poly-alpha-olefin is preferably brought to contact with the structure comprising one or more fibers by applying a film or a dispersion of the amorphous poly-alpha-olefin.

The APAO can be brought into contact with the structure comprising fibers either alone or as a mixture comprising the APAO.

If the APAO or a mixture comprising the APAO is applied as a film, the film preferably had a thickness of from 1 to 2000 $\mu$m, more preferably of from 10 to 500 $\mu$m and most preferably of from 40 to 80 $\mu$m.

The fiber polymer composites according to the invention can be used as or to produce all kinds of reinforced articles, especially flexible tapes. Such reinforced can for example be used in the automotive/bodywork industry or shipbuilding industry.

Reinforced articles according to the invention comprise or consists of a fiber polymer composite according to the invention.

The present invention has been particularly suitable for reinforcing car doors, mud guards, bumpers, engine covers, the backs of car seats, dash boards. Thus, the invention may contribute to make cars more safe (in particular for improving resistance to fragmentation of articles, such as a dash board, after a collision), more resistant to the impact of stones (rubble) (in particular for mud guards) or baggage stored in the car (in particular for the backs of car seats).

With respect to articles for marine yacht building, in addition to the reinforcing effect, the light weight of the tape film or yarn, contributes to a reduction of the metal content and thus reducing the weight of the ship, making it more difficult to sink.

Such reinforced articles may also be protective shields or protective panels for counter protection (e. g. in banks, ticket offices) or wall/facade protection or part of structures such as walls, floors and/or ceilings of buildings, or tubes, pipes and the like.

The subject-matter of the present invention is elucidated in detail in the examples which follow, without any intention that the subject-matter of the present invention be restricted to these.

## Examples:

**Fiber comprising materials used:**

Fabric 1: composed of highly stretched split PP tapes (woven fabric of split PP yarn) with a nominal weight of 200 g/m$^2$ (Tiszatextil Ltd., Tiszaújváros, Hungary). The reinforcing tape has a melting temperature $T_m$ of 168.6 °C (determined by DSC), and a tensile strength of 280±12 MPa (measured on a single tape).

Fabric 2: composed of high strength PP multifilament with a nominal weight of 178 g/m$^2$. (Lanex a.s., Bolatice, Czech Republic). The reinforcing fiber has a melting temperature $T_m$ of 171.6 °C (determined by DSC), and a tensile strength of 558±26 MPa. Its diameter is 27.6 ± 0.6 $\mu$m (measured on single fibers). The woven fabric of high-tenacity is prepared in a small quantity by Csendes és Csendes Ltd. (Szigetbecse, Hungary) upon our request, so its accessibility is limited.

**Matrix material used:**

As matrix material, four different propene-rich VESTOPLAST® grades (708, 750, 792, 888; provided by Evonik Resource Efficiency GmbH, Marl, Germany) were used. The properties and compositions of the VESTOPLAST® grades used are listed in Table 1.

Table 1: Main properties of the four VESTOPLAST® grades

| Properties | VESTOPLAST® 708 | VESTOPLAST® 750 | VESTOPLAST® 792 | VESTOPLAST® 388 |
|---|---|---|---|---|
| Melt viscosity at 190 °C (Pas) | 8 | 50 | 120 | 120 |
| Molecular weight Mn / Mw (g/mol) | 11,500/75,000 | 18,100 / 92,000 | 23,800 / 118,000 | 15,000 / 104,000 |
| Density (g/cm3) | 0.87 | 0.87 | 0.87 | 0.87 |
| Glass transition temperature, Tg (DSC) (°C) | -33 | -33 | -27 | -36 |
| Softening point (Ring & Ball) (°C) | 106 | 107 | 108 | 161 |
| Thermal stability under load S.A.F.T. (°C) | 85-90 | 85-90 | 90-95 | 115-120 |
| Tensile strength (MPa) | 1.0 | 5.0 | 5.8 | 2.5 |
| Elongation at break (%) | 330 | 1000 | 1200 | 350 |
| Shear modulus at 23 °C (MPa) | 4.0 | 14.0 | 7.0 | 3.5 |

Determination of the density at 23 °C according to DIN EN ISO 1183-1.

Determination of Tensile Strength / Elongation at Break according to DIN EN ISO 527-3, modified type 5. The tensile strength describes the tensile and elongation properties of a specimen type 3 with 2 mm thickness.

Determination of the Shear Modulus at 23 °C according to DIN EN ISO 6721-2. This part specifies the general principles of a method for determining the dynamic rheological properties of polymer melts, part 2 described the Torsion-pendulum method.

The content of the monomers the APAOs are based on can be determined using high temperature $^{13}$C-NMR spectroscopy as described above.

Differential scanning calorimetry (DSC) was performed on the VESTOPLAST® samples and the reinforcing fiber and tape. It was found that a very wide processing window exists based on the difference in the melting ranges of VESTOPLAST® and PP tape. This ensures that composites can even be manufactured at a relatively low processing temperature avoiding the molecular relaxation of the reinforcement (which causes a prominent loss in both stiffness and strength and thus reducing its reinforcing effect). However, compared to the VESTOPLAST® 700 series, VESTOPLAST® 888 exhibits a different melting behavior. VESTOPLAST® 888 has a small melting peak around 160 °C, so below this temperature it cannot be processed by extrusion at all. For stable processing and coating, a die temperature of 180 °C was necessary. This temperature accelerates the molecular relaxation of the reinforcement to be coated, even at a fast pulling speed and thereby short residence time in this temperature range.

Instrumented falling weight impact (IFWI) tests were performed (the method is described in detail under example 4 below). The results of room temperature tests gave the highest energy absorption capability - instead of VESTOPLAST® 888 of which the result of -40 °C proved unexpectedly high energy absorption.

**Example 1: Preparing fiber polymer composites**

The fiber polymer composites were produced using a fabric guiding equipment that was mounted to a cast film extrusion line Labtech LE 25-30C (Labtech Engineering Co., Samutprakarn, Thailand). The slot die is 200 mm wide and the gap can be set between 0.1 to 1.0 mm. During production, the equipment guides the reinforcing fabric (200 mm wide) to the flat film die of the extruder, where the matrix film is extruded directly onto the fabric. After extrusion, the coated fabric is guided towards a winder by polytetrafluoroethylene (PTFE) rollers while it cools down. In order to avoid the coated fabric to stick together, a PTFE film is also added during the winding process.

The fiber content of the composites is defined by the thickness of the matrix films, and the extent of the relaxation phenomenon of the fabric during consolidation/compaction. The thickness of the matrix films is determined by the following parameters of the extrusion:

- the rotating speed of the extruder screw,
- the distance between the die lips,
- the pulling speed of the coated fabric.

Due to the adhesion between the matrix material film and the reinforcing fabric, they cannot be separated; consequently, the thickness of the matrix film cannot be measured directly. Nevertheless, the thickness of the matrix film can be calculated after measuring the width of the fabric, the width of the matrix layer, and the length and weight of the coated fabric, using the following equation: $h=(m-b_f \rho_{A,f})l/(\rho_{Vp}b_{Vp}l)$, where h is the thickness of the matrix film, m is the weight of the coated fabric, $b_f$ is the width of the coated fabric, l is the length of the coated fabric, $\rho_{A,f}$ is the areal density of the fabric, $\rho_{Vp}$ is the density of the matrix material and $b_{Vp}$ is the width of the matrix material coating.

To achieve a fiber content of the composites of between 70 to 80 wt%, the thickness of the matrix material layer was chosen to be around 60 $\mu$m.

Preliminary tests were conducted in order to specify the above-mentioned extrusion parameters to achieve a 60 $\mu$m film thickness. In these tests the rotating speed of the extruder screw and the distance between the die lips were 70 min-1 and 0.5 mm, respectively, the pulling speed of the coated fabric was altered in the range of 3 to 10 m/min, using a step of 0.5 m/min, and the rotating speed of the winder was set accordingly. The thickness of the matrix material film was calculated in each point and the required pulling speed to achieve 60 $\mu$m film thickness was determined by linear interpolation. The required pulling speeds for all matrices are summarized in Table 2. The temperature of the die was 120 °C for VESTOPLAST® 708, 750 and 792 and 180 °C for VESTOPLAST® 888 (only at this temperature the stable production could be ensured). The first roll was heated up to 40 °C. The resulting coated fabrics were 55-65 $\mu$m thick and 150-160 mm wide depending on the viscosity and the pulling speed.

Table 2: Required pulling speed to achieve 60 $\mu$m film thickness

| Matrix material | Pulling speed (m/min) |
|---|---|
| VESTOPLAST® 708 | 7.4 |
| VESTOPLAST® 750 | 8.9 |
| VESTOPLAST® 792 | 5.5 |
| VESTOPLAST® 888 | 9.0 |

**Example 2: Preparing multi fiber polymer composites**

For producing fiber polymer composites comprising several plies of the coated fabrics of example 1 (multi fiber polymer composites) a double belt press (DBP) type Reliant Powerbond-HPC, Reliant, Lukon, UK was used.

4 plies of the coated fabrics were placed on each other (with the coated side upside) and an uncoated ply of fabric was placed on the top of the package. The pre-products were 1.5 m long. A piece of thin PTFE film was inserted in between the first and second coated fabric to help the ease separation of the first 60 mm section of the peel specimen before testing.

Some preliminary tests were performed in order to determine the suitable consolidation speed of the DBP. To attain uniform properties lengthwise, a pulling speed of 1.5 m/min and a pressure of 6 bar (6 bar being the maximum adjustable pressure value of the DBP) was used for all consolidation temperatures (120 °C, 140 °C, and 160 °C). At least 3 multi fiber polymer composites were produced with each of the matrices and each consolidation temperature.

At an elevated temperature, a relaxation phenomenon occurs in the highly oriented PP tapes (fabrics). This phenomenon not only deteriorates the reinforcing potential of the fibers, but reduces the length and the width of the fabric, and increases its thickness. Due to this effect, the areal density of the reinforcing fabric increases, which increases the fiber content of the composites. The extent of relaxation can be calculated with the initial area of the pre-products, and the area of the resulting composites after consolidation, with the following equation:

$$s=(1-(b_2 l_2)/(b_1 l_1))\cdot 100,$$

where s (%) is the relaxation of the fabric, $b_1$ and $l_1$ are the initial width and length of the pre-products, respectively, and $b_2$ and $l_2$ are the width and length of the composites after consolidation, respectively. The relaxations of fabric 1 for all matrices and consolidation temperatures are shown in Table 3a.

Table 3a Relaxations of fabric 1 in the fiber polymer composites

| Matrix material | Consolidation temperature [°C] | Relaxation of fabric [%] |
|---|---|---|
| VESTOPLAST® 708 | 120 | 5.3 |
| VESTOPLAST® 708 | 140 | 14.9 |
| VESTOPLAST® 708 | 160 | 38.6 |
| VESTOPLAST® 750 | 120 | 5.8 |
| VESTOPLAST® 750 | 140 | 15.3 |
| VESTOPLAST® 750 | 160 | 39.1 |
| VESTOPLAST® 792 | 120 | 4.3 |
| VESTOPLAST® 792 | 140 | 17.0 |
| VESTOPLAST® 792 | 160 | 37.6 |
| VESTOPLAST® 888 | 120 | 7.2 |
| VESTOPLAST® 888 | 140 | 14.1 |
| VESTOPLAST® 888 | 160 | 43.3 |

With the relaxation, the altered areal density can also be calculated with the following formula:

$$\rho_{A*} = (1+s) * \rho_A,$$

where $\rho_{A*}$ is the altered areal density of the fabric, s is the relaxation and $\rho_A$ is the initial areal density of the fabric.

The reinforcing fabric was wider than the matrix material coated on it. Consequently, the edges of the composite sheets did not contain enough matrix material to achieve a satisfactory level of consolidation, so the edges of the composites were removed using a manual sheet shearing machine. After measuring the length, the width and the weight of the composite sheets, the fiber content can be calculated using the following equation:

$$f = 5b * l * \rho_{A*} / m * 100,$$

where f is the fiber content of the composite, b* and l* are the width and length of the composite sheet, respectively, $\rho A*$ is the altered areal density of the reinforcing fabric and m is the weight of the composite sheet. Table 3b contains the reinforcing fiber content of the fiber polymer composites obtained using fabric 1.

Table 3b: Fiber content of the fiber polymer composites

| Matrix material | Consolidation temperature [°C] | Fiber content [wt%] |
|---|---|---|
| VESTOPLAST® 708 | 120 | 79.8 |
| VESTOPLAST® 708 | 140 | 79.9 |
| VESTOPLAST® 708 | 160 | 75.5 |
| VESTOPLAST® 750 | 120 | 78.3 |
| VESTOPLAST® 750 | 140 | 79.5 |
| VESTOPLAST® 750 | 160 | 71.0 |
| VESTOPLAST® 792 | 120 | 72.6 |
| VESTOPLAST® 792 | 140 | 75.1 |
| VESTOPLAST® 792 | 160 | 72.6 |
| VESTOPLAST® 888 | 120 | 90.3 |

(continued)

| Matrix material | Consolidation temperature [°C] | Fiber content [wt%] |
|---|---|---|
| VESTOPLAST® 888 | 140 | 87.0 |
| VESTOPLAST® 888 | 160 | 86.7 |

The consolidation/compaction of the fiber polymer composites obtained in example 2 was assessed by density measurement, peel test and microscopy. It was found that the density is unaffected by the matrix type but increased slightly with increasing consolidation temperature (for more details see example 4).

### Example 3: Preparing multi fiber polymer composites from fabric 2

Examples 1 and 2 were repeated using fabric 2 with VESTOPLAST® 708 and 792 respectively as matrix materials at a consolidation temperature of 120 °C. All other steps and parameters were the same as already presented for fabric 1 in examples 1 and 2.

### Example 4: Testing of the fiber polymer composites and results

Test examples were cut from the fiber polymer composites obtained in example 2 and 3 using a manual sheet shearing machine.

Since there is somewhat a difference between the fiber contents of the fiber polymer composite samples, the mechanical test results were normalized to 75 wt% by multiplying the determined test values by the ratio of (75%)/(determined reinforcing content).

### Density:

The density of the fiber polymer composite samples was evaluated in absolute ethanol at 23 °C, according to EN ISO 1183-1. The results are given in table 4a below.

### Interlaminar peel strength:

The interlaminar (peel) strength of the fiber polymer composite samples was determined on 25 mm x 300 mm rectangular specimens with a Zwick Z020 (load cell 20 kN) universal testing machine at a crosshead speed of 152 mm/min by peeling off the side reinforcing and matrix layers of the composite sheets. Although the standard suggests to use a special peeling device which can be mounted on the crosshead of the tensile testing machine, due to the relatively low modulus of the composites, the specimens were fixed directly in the grips of the tensile testing machine. Consequently, the results of the peel test cannot be compared to the interlaminar strengths of other kinds of fabric-reinforced composites. Nevertheless, the effect of the matrix material and the consolidation temperature on the interlaminar strength of the VESTOPLAST® based composites can be investigated based on the results of the conducted peel tests. To initiate peeling, we inserted a small piece of polytetrafluoroethylene film between the first and second coated fabric during the assembly of the layers (for details see example 2). The values for Peel Strength obtained by this test are given in table 4a below

### Static tensile:

Static tensile tests were performed on rectangular specimens of 25 mm x 200 mm (width x length) of the fiber polymer composite samples with a Zwick Z250 (load cell 20 kN) universal testing machine at a crosshead speed of 5 mm/min. The results of the static tensile tests, e.g. Tensile Strength and Young Modulus are given in table 4a below.

Table 4a: Density, tensile strength and young modulus of the fiber polymer composites

| MM | CT | D | PS | TS-40 | TS23 | TS80 | YM-40 | YM23 | YM80 |
|---|---|---|---|---|---|---|---|---|---|
| V 708 | 120 | 0.714 | 0.36 | 95.1 | 47.4 | 18.5 | 1333 | 610 | 175 |
| V 708 | 140 | 0.710 | 0.20 | 93.9 | 42.2 | 13.1 | 1003 | 492 | 147 |
| V 708 | 160 | 0.722 | 0.10 | 60.7 | 28.8 | 10.4 | 1355 | 340 | 83 |

(continued)

| MM | CT | D | PS | TS-40 | TS23 | TS80 | YM-40 | YM23 | YM80 |
|---|---|---|---|---|---|---|---|---|---|
| V 750 | 120 | 0.703 | 1.08 | 95.2 | 53.9 | 14.2 | 853 | 530 | 129 |
| V 750 | 140 | 0.680 | 0.72 | 85.8 | 65.4 | 11.5 | 1103 | 355 | 111 |
| V 750 | 160 | 0.776 | 1.13 | 84.1 | 43.9 | 11.1 | 1058 | 326 | 80 |
| V 792 | 120 | 0.743 | 1.65 | 96.2 | 62.6 | 16.6 | 1328 | 443 | 140 |
| V 792 | 140 | 0.772 | 1.45 | 89.5 | 74.5 | 9.9 | 1224 | 476 | 98 |
| V 792 | 160 | 0.791 | 1.96 | 78.5 | 57.4 | 11.2 | 1245 | 368 | 104 |
| V 888 | 120 | 0.751 | 0.16 | 79.4 | 42.3 | 13.3 | 895 | 496 | 134 |
| V 888 | 140 | 0.714 | 0.20 | 71.1 | 38.2 | 10.8 | 758 | 285 | 99 |
| V 888 | 160 | 0.807 | 0.63 | 61.7 | 29.2 | 8.1 | 798 | 241 | 62 |

MM: matrix Material; V: VESTOPLAST®; CT: Consolidation Temperature given in °C; D: Density given in g/cm$^3$; PS: Peel Strength given in N/mm; TS-40: Tensile Strength tested at -40 °C given in MPa; TS23: Tensile Strength tested at 23 °C given in MPa; TS80: Tensile Strength tested at 80 °C given in MPa; YM-40: Young Modulus tested at -40 °C given in MPa; YM23: Young Modulus tested at 23 °C given in MPa; YM80: Young Modulus tested at 80 °C given in MPa.

From the results in table 4a it can be seen, that the peel strength of fiber polymer composites increased with increasing molecular weight (Mw) of the matrix material VESTOPLAST® (from type 708 to 792) and therefore the interaction between the layers improved significantly. VESTOPLAST® 888 proved moderate peel strength values. Higher consolidation temperatures resulted in only a small improvement - especially for larger Mw samples (VESTOPLAST® 792, 888).

The tensile test results show, there is a small improvement in tensile strength for fiber polymer composites consolidated at 140 °C compared to 120 °C, tested at room temperature. In the case of the consolidation temperature of 160 °C, a huge decrement occurred. When they were tested at 80 °C there was no big difference either for consolidation temperature or matrix type.

**Instrumented falling weight impact**

Instrumented falling weight impact (IFWI) tests were performed on a Fractovis 6785 device (Ceast, Pianezza, Italy) with the following settings: maximal energy: 593.4 J; diameter of the dart: 20 mm; diameter of the support ring: 40 mm; weight of the dart: 60.5 kg and drop height: 1 m. The IFWI test was conducted on 110 mm x 110 mm square specimens of the fiber polymer composite samples in the case of fabric 1., and 150 mm x 150 mm square specimens were used in the case of composites made of fabric 2. The test was also performed using a dart with a diameter of 15.9 mm on VESTOPLAST® 792-based composites at 23 °C, in order to reveal the effect of the dart diameter on the perforation energy of the composites. The perforation energy was calculated from the total energy dissipated divided by the thickness of the test samples. The results are given in tables 4b and 4c below.

Table 4b: Perforation energies of the fiber polymer composites

| MM | CT | PE-40 | PE23 | PE80 |
|---|---|---|---|---|
| V 708 | 120 | 35.6 | 31.6 | 59.2 |
| V 708 | 140 | 31.6 | 25.8 | 57.6 |
| V 708 | 160 | 17.7 | 18.6 | 20.6 |
| V 750 | 120 | 46.0 | 30.3 | 58.1 |
| V 750 | 140 | 32.7 | 26.8 | 62.8 |
| V 750 | 160 | 16.4 | 17.3 | 15.4 |
| V 792 | 120 | 34.8 | 24.8 | 67.8 |
| V 792 | 140 | 22.7 | 25.1 | 55.9 |

(continued)

| MM | CT | PE-40 | PE23 | PE80 |
|---|---|---|---|---|
| V 792 | 160 | 18.9 | 18.7 | 18.7 |
| V 888 | 120 | 41.3 | 55.1 | 49.1 |
| V 888 | 140 | 34.3 | 39.5 | 65.4 |
| V 888 | 160 | 16.0 | 16.9 | 17.1 |
| MM: matrix Material; V: VESTOPLAST®; CT: Consolidation Temperature given in °C; PE-40: Perforation Energy tested at -40 °C given in J/mm; PE23: Perforation Energy tested at 23 °C given in J/mm; PE80: Perforation Energy tested at 80 °C given in J/mm; | | | | |

It can be seen from the results given in table 4b that there is only vanishing difference between the VESTOPLAST® 700 series-based fiber polymer composites but VESTOPLAST® 888 exhibited higher perforation energy at room temperature, especially composites consolidated at 120 and 140°C, probably due to the poorer consolidation. Increasing consolidation temperature improved consolidation and the matrix/reinforcement interaction, and thereby decreased the damping capability of the fiber polymer composites.

The perforation energy of the composites consolidated at 120 and 140 °C, tested at -40 °C and +80 °C, was higher than the results of composites tested at room temperature.

VESTOPLAST® 888 itself possess an unexpectedly high perforation energy value at -40 °C, so in the case of VESTOPLAST® 888 the test was also performed at -60 °C. At -60 °C VESTOPLAST® 888 behaves similarly to the other investigated VESTOPLAST grades at -40 °C. The different behaviour of VESTOPLAST® 888 at lower temperatures can be attributed to the lower glass transition temperature ($T_g$) of VESTOPLAST® 888.

The failed IFWI specimens were analysed by sight. The failure behavior at lower temperatures was tape fracture and matrix deformation with moderate delamination but at higher testing temperatures significant wrinkling and creasing also occurred.

Table 4c: Effect of dart diameter on perforation energy values of the fiber polymer composites

| MM | CT | PE23-15.9 | PE23-20 |
|---|---|---|---|
| V 792 | 120 | 16.6 | 24.8 |
| V 792 | 140 | 13.5 | 25.1 |
| V 792 | 160 | 13.3 | 18.7 |
| MM: matrix Material; V: VESTOPLAST®; CT: Consolidation Temperature given in °C; PE-23-15.9: Perforation Energy tested at 23 °C with a dart having a diameter of 15.9 mm given in J/mm; PE-23-20: Perforation Energy tested at 23 °C with a dart having a diameter of 20 mm given in J/mm. | | | |

It can be seen from the results in table 4c that the perforation energy is higher in the case of the dart with a diameter of 20 mm.

The IFWI tests were also performed with samples obtained in example 4 (based on fabric 2). The size of the samples was increased from 110 x 110 mm to 150 x 150 mm in order to ensure better gripping by the clamping unit of the falling weight impact tester. The results are given in Table 5.

Table 5: Perforation Energy of the fiber polymer composites of example 3

| MM | CT | PE-40 | PE23 | PE80 |
|---|---|---|---|---|
| V 708 | 120 | 29 | 167 | 180 |
| V 792 | 120 | 59 | 193 | 300 |
| MM: matrix Material; V: VESTOPLAST®; CT: Consolidation Temperature given in °C; PE-40: Perforation Energy tested at -40 °C given in J/mm; PE23: Perforation Energy tested at 23 °C given in J/mm; PE80: Perforation Energy tested at 80 °C given in J/mm; | | | | |

Testing at 80 °C causes significant softening of both matrix and reinforcement, therefore the clamping force of the instruments were not enough to keep the specimens in the right position, so the dart creased the specimens in the support ring. Thereby the values determined at 80 °C are only informative.

Comparing the results given in tables 4b and 5 it becomes clear, that the impact energy absorption capability can be further improved significantly by using a stronger fabric, as for example fabric 2, a woven fabric of high-tenacity PP multifilament.

**Morphology**

The morphology of the fiber polymer composites was studied with a scanning electron microscope (SEM) and with a light microscope (LM).

SEM images of the surface of the peel samples were taken with a Jeol JSM 6380 LA scanning electron microscope (Jeol Ltd., Tokyo, Japan). Before SEM, the surfaces of the test samples were sputter-coated with gold.

Light microscopy images of cut cross-sections prepared by cryogenic microtome at -50 °C were taken with an Olympus BX51M light microscope (Olympus, Hamburg, Germany).

Some of the samples produced in example 2 were peeled and examined using a scanning electronic microscope (SEM). The SEM images showed, that the matrix of the composites consolidated at 120 °C showed some delamination; the surface of the tapes remained generally intact. For the VESTOPLAST® 888 based composites, tape/matrix interaction was poor. For the fiber polymer composites consolidated at 160 °C, some fibrillation of the tapes and much better tape/matrix adhesion can also be observed.

The samples produced in example 2 were examined using a light microscope. The main difference between the samples consolidated at different temperatures is that the composites kept their laminated structure at 120 °C but deformed at 160 °C. The structures consolidated at 140 °C are similar to those of the fiber polymer composites consolidated at 120 °C. The destruction of the structure is probably caused by the high temperature, high pressure and intensive relaxation.

**Example 5: Comparison with other fiber polymer composites**

Perforation energy and tensile strength values were determined using the test methods as mentioned above for different fiber polymer composites known in the art and/or commercially available. The results are given in tables 6a and 6b below.

Table 6a: Comparison of the perforation energy of the fiber polymer composites according to the present invention with known and/or commercially available fiber polymer composites

| MM/FPC | CT | PE23 |
|---|---|---|
| V 792, fabric 1 | 120 | 34.8 |
| V 792, fabric 2 | 120 | 193.1* |
| CURV® [1] | | 24.8 |
| PURE® [2] | | 23.4 |
| Self-reinforced PP, hot compacted at 188 °C [3] | | 21.5 |
| Self-reinforced PP with added PP films, hot compacted at 188 °C [4] | | 22.0 |
| Self-reinforced PP, film-stacking at 165 °C [5] | | 15.1 |
| Self-reinforced PP with beta-PP as matrix, film-stacking at 156 °C [6] | | 18.0 |
| MM: matrix Material; FPC: fiber polymer composite; V: VESTOPLAST®; CT: Consolidation Temperature given in °C; PE23: Perforation Energy tested at 23 °C given in J/mm. <br> * in the case of fabric 2, although the specimens were perforated, they were also severely deformed, as the clamping force was not enough to keep the specimens in the right position during the test. A significant portion of the high perforation energy was caused by this undesirable deformation. Nevertheless, it is certain that the composites prepared with fabric 2 have bigger perforation energy values due to the higher strength and tenacity of fabric 2, but the correct value is somewhat lower. |||

Table 6b: Comparison of the tensile strength of the fiber polymer composites according to the present invention with known and/or commercially available fiber polymer composites

| MM/FPC | CT | TS23 |
|---|---|---|
| V 792, fabric 1 | 120 | 63 |
| V 792, fabric 2 | 120 | 99 |
| CURV® [1] | | 152 |
| PURE® [2] | | 200 |
| Self-reinforced PP, hot compacted at 188 °C [3] | | 138 |
| Self-reinforced PP with added PP films, hot compacted at 188 °C [4] | | 150 |
| Self-reinforced PP, film-stacking at 165 °C [5] | | 125 |
| Self-reinforced PP with beta-PP as matrix, filmstacking at 156 °C [6] | | 91 |
| MM: matrix Material; FPC: fiber polymer composite; V: VESTOPLAST®; CT: Consolidation Temperature given in °C; TS23: Tensile Strength tested at 23 °C given in MPa. | | |

More details to the fiber polymer composites not according to the invention can be found at the following references:

[1] www.curvonline.com (2019.06.08.)
[2] www.ditweaving.com (2019.06.10.)
[3] Swolfs Y., Van den Fonteyne W., Baets J., Verpoest I.: Failure behavior of self-reinforced polypropylene at and below room temperature. Applied Science and Manufacturing, 65, 100-107 (2014).
[4] Swolfs Y., Zhang Q., Baets J., Verpoest I.: The influence of process parameters on the properties of hot compacted self-reinforced polypropylene composites. Composites Part A: Applied Science and Manufacturing, 65, 38-46 (2014).
[5] Barany T., Izer A., Czigány T.: High performance self-reinforced polypropylene Composites. Materials Science Forum, 537, 121-128 (2007).
[6] Barany T., Izer A., Karger-Kocsis J.: Impact resistance of all-polypropylene composites composed of alpha and beta modifications. Polymer Testing, 28, 176-182 (2009).

From the results given in table 6a it becomes clear that fiber polymer composites according to the present invention show much higher penetration energy values than those known in the art. The fiber polymer composites according to the present invention are therefore much more stable regarding penetration by for example bullets or arrows and can therefore be better used to produce bullet proof or safety clothes.

From the results given in table 6b it becomes clear that fiber polymer composites according to the present invention show lower tensile strength values than those known in the art and therefore are less brittle.

The examples show, that fiber polymer composites based on propylene rich APAO matrix material possess good mechanical properties and excellent mechanical energy damping properties. From the examples it becomes clear, that especially the propylene rich APAOs VESTOPLAST® 792 and 750 show excellent mechanical and mechanical energy damping properties. It becomes clear from the examples that processing (Consolidation/compaction) temperatures of from 120 and 140 °C are sufficient to obtain useful fiber polymer composites. This temperature range is well below the temperature used for processing other (all-)polypropylene composites known in the art. This way, energy is saved and the reinforcement is processed more gently (with less heat).

**Claims**

1.   Fiber polymer composite comprising fibers of a first material and a matrix material, the matrix material being in direct contact with at least some of the fibers, **characterized in that** the matrix material comprises at least 5 % by weight based on the whole matrix material of an amorphous poly-alpha-olefin.

2.   Fiber polymer composite as claimed in claim 1, **characterized in that** the first material fibers are selected polymer fibers composites, carbon fibers, glass fibers, metal fibers, cellulose fibers, ceramic fibers, nano fibers, textile fibers, and graphene fibers, more preferably selected from polymer fibers, even more preferably selected from polyolefin fibers and most preferably selected from polypropylene fibers.

3. Fiber polymer composite as claimed in claim 1 or claim 2, **characterized in that** the amorphous poly-alpha-olefin has a melt viscosity at 190°C of less than 200 Pas, more preferably of from 5 to 150 Pas, determined by the method specified in the description.

4. Fiber polymer composite as claimed in at least one of claims 1 to 3, **characterized in that** the amorphous poly-alpha-olefin has a number average molecular weight $M_n$ of from 5000 to 35000 g/mol, more preferably of from 10000 to 25000 g/mol, determined by the method specified in the description.

5. Fiber polymer composite as claimed in at least one of claims 1 to 4, **characterized in that** the amorphous poly-alpha-olefin has a weight average molecular weight $M_w$ of from 50000 to 150000 g/mol, more preferably of from 70000 to 125000 g/mol, determined by the method specified in the description.

6. Fiber polymer composite as claimed in at least one of claims 1 to 5, **characterized in that** the amorphous poly-alpha-olefin has a molecular weight distribution ($M_w/M_n$) of from 4 to 8, more preferably 4.5 to 7.5, determined by the method specified in the description.

7. Fiber polymer composite as claimed in at least one of claims 1 to 6, **characterized in that** the amorphous poly-alpha-olefin has a glass transition temperature of from -45 to -20 °C, more preferably of from -40 to -25, most preferably of from -35 to -25, determined by the method specified in the description.

8. Fiber polymer composite as claimed in at least one of claims 1 to 7, **characterized in that** the amorphous poly-alpha-olefin has a thermal stability under load S.A.F.T. of from 75 to 130 °C, more preferably of from 80 to 120 °C and most preferably of from 85 to 100 °C, determined by the method specified in the description.

9. Fiber polymer composite as claimed in at least one of claims 1 to 8, **characterized in that** the amorphous poly-alpha-olefin has a softening point of from 95 to 125, more preferably of from 100 to 115 °C, and most preferably of from 105 to 110 °C, determined by the method specified in the description.

10. Process for producing fiber polymer composite as claimed in at least one of claims 1 to 9, **characterized in that** it comprises the following steps:

    a) providing a structure comprising one or more fibres
    b) contacting at least one side of the structure with an amorphous poly-alpha-olefin
    c) optionally contacting the amorphous poly-alpha-olefin with one side of a further structure comprising one or more fibres,
    d) optionally repeating steps b) and c) one or more times, and
    e) treating the product resulting from step b), c) or d) thermally by applying a temperature of from 115 to 145 °C, preferably 120 to 140 °C and a pressure of at least 0.2 MPa.

11. Process as claimed in claim 10, **characterized in that** the amorphous poly-alpha-olefin to brought to contact with the structure comprising one or more fibers by applying a film or a dispersion of the of the amorphous poly-alpha-olefin.

12. Use of fiber polymer composites as claimed in at least one of claims 1 to 9 as or to produce reinforced articles, especially flexible tapes.

13. Reinforce article comprising or consisting of fiber polymer composite as claimed in at least one of claims 1 to 9.

Europäisches
Patentamt

European
Patent Office

Office européen
des brevets

## EUROPEAN SEARCH REPORT

Application Number

EP 20 17 4377

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/251660 A1 (JANKE DOREEN [DE] ET AL) 6 September 2018 (2018-09-06) * paragraphs [0043] - [0051], [0084] - [0087], [0090] - [0102] * * paragraphs [0106], [0115] - [0119] * | 1-13 | INV. C08J5/04 B32B5/02 B32B5/26 D06N3/00 D06N3/04 |
| X | WO 2007/142749 A1 (FULLER H B LICENSING FINANC [US]; MILLER RICHARD A [US] ET AL.) 13 December 2007 (2007-12-13) * page 1, line 4 - line 6; claims 1,5 * * page 4, line 23 - page 5, line 19 * * page 6, line 15 - line 18 * * page 8, line 13 - line 20; example 1 * | 1-13 | |
| X | DATABASE WPI Week 201438 Thomson Scientific, London, GB; AN 2014-K48360 XP002800666, & CN 103 710 981 A (PENG Z) 9 April 2014 (2014-04-09) * abstract * | 1,2, 10-13 | |
| X | WO 2011/011729 A1 (BOSTIK INC [US]; ALPER MARK D [US]; KANDERSKI MONINA D [US]) 27 January 2011 (2011-01-27) * paragraphs [0006], [0012] - [0026], [0040] - [0044], [0056] - [0058], [0068], [0115]; claims 1,19-21,34,40; examples * * pages 30-40 * | 1-11 | TECHNICAL FIELDS SEARCHED (IPC) C08J B32B D06Q D06N |
| X | DE 20 2006 021312 U1 (DÖLLKEN KUNSTSTOFFVERARBEITUNG GMBH [DE]) 18 September 2015 (2015-09-18) * paragraphs [0001], [0010], [0011]; claims 1,5,6; figure 1 * | 1,2 | |

-/--

The present search report has been drawn up for all claims

| Place of search | Date of completion of the search | Examiner |
|---|---|---|
| Munich | 14 October 2020 | Kanetakis, Ioannis |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt

European
Patent Office

Office européen
des brevets

## EUROPEAN SEARCH REPORT

Application Number

EP 20 17 4377

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | B. ALCOCK ET AL: "Interfacial properties of highly oriented coextruded polypropylene tapes for the creation of recyclable all-polypropylene composites", JOURNAL OF APPLIED POLYMER SCIENCE, vol. 104, no. 1, 5 April 2007 (2007-04-05), pages 118-129, XP055739421, US ISSN: 0021-8995, DOI: 10.1002/app.24588 * page 118 - page 119 * * page 121 - page 123; figures * ----- | 1,2, 10-13 | |

TECHNICAL FIELDS SEARCHED (IPC)

The present search report has been drawn up for all claims

| Place of search | Date of completion of the search | Examiner |
|---|---|---|
| Munich | 14 October 2020 | Kanetakis, Ioannis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 910 009 A1**

## ANNEX TO THE EUROPEAN SEARCH REPORT
## ON EUROPEAN PATENT APPLICATION NO.                    EP 20 17 4377

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2020

| Patent document cited in search report | | Publication date | Patent family member(s) | | Publication date |
|---|---|---|---|---|---|
| US 2018251660 | A1 | 06-09-2018 | CN | 107922697 A | 17-04-2018 |
| | | | EP | 3350261 A1 | 25-07-2018 |
| | | | US | 2018251660 A1 | 06-09-2018 |
| | | | WO | 2017046045 A1 | 23-03-2017 |
| WO 2007142749 | A1 | 13-12-2007 | US | 2007281118 A1 | 06-12-2007 |
| | | | WO | 2007142749 A1 | 13-12-2007 |
| CN 103710981 | A | 09-04-2014 | NONE | | |
| WO 2011011729 | A1 | 27-01-2011 | AU | 2010275394 A1 | 01-03-2012 |
| | | | BR | 112012001614 A2 | 31-01-2017 |
| | | | CA | 2768970 A1 | 27-01-2011 |
| | | | CN | 102498170 A | 13-06-2012 |
| | | | EP | 2456819 A1 | 30-05-2012 |
| | | | ES | 2712750 T3 | 14-05-2019 |
| | | | JP | 5909445 B2 | 26-04-2016 |
| | | | JP | 2013500359 A | 07-01-2013 |
| | | | MX | 345234 B | 04-01-2017 |
| | | | TR | 201900737 T4 | 21-02-2019 |
| | | | US | 2011021103 A1 | 27-01-2011 |
| | | | WO | 2011011729 A1 | 27-01-2011 |
| DE 202006021312 U1 | | 18-09-2015 | NONE | | |

EPO FORM P0459

For more details about this annex : see Official Journal of the European Patent Office, No. 12/82

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004103673 A2
- EP 1631431 B1
- US 9403341 B2
- US 9873239 B2
- US 2018126708 A1
- WO 2004028803 A1
- US 10384400 B2

**Non-patent literature cited in the description**

- **T. BARANY et al.** *Polymer Testing,* 2009, vol. 28, 176-182
- **A. ZAMBELLI et al.** *Macomolecules,* 1975, vol. 8, 687
- **A. FILHO ; G. GALLAND.** *J. Appl. Polym. Sci.,* 2001, vol. 80, 1880
- **J.C. RANDALL.** Polymer Sequence determination. Academic Press, 1977
- **SWOLFS Y. ; VAN DEN FONTEYNE W. ; BAETS J. ; VERPOEST I.** Failure behavior of self-reinforced polypropylene at and below room temperature. *Applied Science and Manufacturing,* 2014, vol. 65, 100-107
- **SWOLFS Y. ; ZHANG Q. ; BAETS J. ; VERPOEST I.** The influence of process parameters on the properties of hot compacted self-reinforced polypropylene composites. *Composites Part A: Applied Science and Manufacturing,* 2014, vol. 65, 38-46
- **BARANY T. ; IZER A. ; CZIGÁNY T.** High performance self-reinforced polypropylene Composites. *Materials Science Forum,* 2007, vol. 537, 121-128
- **BARANY T. ; IZER A. ; KARGER-KOCSIS J.** Impact resistance of all-polypropylene composites composed of alpha and beta modifications. *Polymer Testing,* 2009, vol. 28, 176-182